# EUROPEAN PATENT SPECIFICATION

(11) **EP 1 075 798 B1**
(45) Date of publication and mention of the grant of the patent: **28.02.2007**
(21) Application number: 99917227.3
(22) Date of filing: 28.04.1999
(51) Int. Cl.: A23L 1/40, A23L 1/24, A23L 1/226, A23L 1/227

(54) **PROCESS FOR PRODUCING DRY INSTANT SOUPS AND SAUCES**
VERFAHREN ZUR HERSTELLUNG TROCKENER INSTANTSUPPEN- UND SOSSEN
PROCEDE RELATIF A LA PRODUCTION DE SOUPES ET DE SAUCES EN POUDRE INSTANTANEES

(30) Priority: 07.05.1998 JP 12450798; 07.05.1998 JP 12450898
(43) Date of publication of application: 14.02.2001
(73) Proprietor: Ajinomoto Co., Inc., Tokyo 104-8315 (JP)
(72) Inventor: KAWASE, Hiroshi, Kawasaki-shi, Kanagawa-ken 210-0801 (JP); HASEGAWA, Masayo, Shinagawa-ku, Tokyo 141-0031 (JP); SASAKI, Hitoshi, Kawasaki-shi, Kanagawa-ken 210-0801 (JP); MIYAMURA, Naohiro, Kawasaki-shi, Kanagawa-ken 210-0801 (JP)
(74) Representative: Nash, David Allan
(86) International application number: PCT/JP1999/002310
(87) International publication number: WO 1999/056566

(56) References cited:
- EP-A- 0 951 840
- JP-A- 7 313 096
- JP-A- 8 107 768
- US-A- 3 678 064

## Description

### Technical Field

The present invention relates to a novel method for producing a dried instant soup, or sauce, in which at least one compound selected from the sulfur-containing compounds represented by the following general formulae (1) and (2): 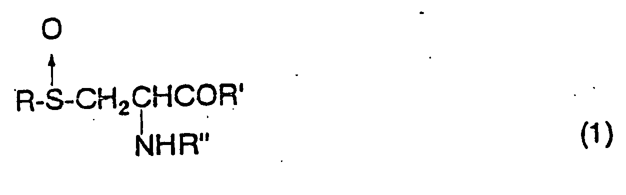 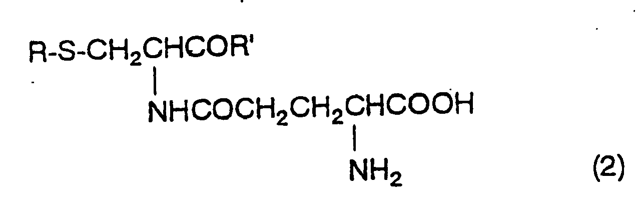 is added thereto whereby the characteristic flavor of vegetables, mushrooms, spices and/or the like contained in the soup, sauce or the like may be fortified (enhanced) and maintained over a long time, and to a food composition and the like obtained by this method. The sulfur-containing compound(s) may also be in the form of a salt. In the above formulae, R denotes a hydrogen atom, a saturated or unsaturated aliphatic hydrocarbon group with 1 to 3 carbon atoms or a carboxyalkyl group, R' denotes a hydroxyl group or a carboxymethylamino group, and R" denotes a hydrogen atom or a Y - glutamyl group, respectively.

### Background Art

The demand for dried instant soups persists by reason of their ease of use. In particular, due to a boom in healthy foods, there is general preference for healthy soup containing vegetables and mushrooms in large quantities. Moreover, because of the general liking for ethnic food, there is a also a general preference for spicy soup. Dried instant soup preserves excellently because it is a dried food and frequently has its effective tasting time period set for a relatively long time. However, the starting components contained in the powdered soup, especially vegetables, mushrooms and spices rapidly deteriorate in flavour on drying or during storage, thus presenting the problem of reducing commercial value of the dried instant soup during its storage.

For preventing deterioration of the flavor attributable to spices, there is proposed in Japanese Patent Kokai Publication JP-A-9-75042 a process for preparing a seasoning sauce in which a starting material is previously heated under degassing and tight sealing to prevent deterioration of the spices ascribable to heating sterilization during the production process. However, heating processing frequency is not provided in the production process method for the powdered soup. If such processing is provided, the process proposed in the above-mentioned publication needs enormous investment costs and hence is difficult to effect in view of constraints on the production cost.

As to the effect on the flavor of sulfur-containing compounds, there have so far been known an instance (1) of fortifying the flavor of meat in foods, especially canned food, by using the Maillard reaction, employing sugars and amino acids ih combination, as disclosed in Japanese Patent Kokoku Publication JP-B-42-22194, Japanese Patent Kokoku Publication JP-B-49-35149 and in Japanese Patent Kokoku Publication JP-B-53-28977, and an instance (2) of fortifying "kokumi" (thickness, mouthfulness and continuity) taste of the food by conjunctive use of components having "Umami" taste, as disclosed in Japanese Patent Kokoku Publication JP-B-63-13661. However, the precise effect of these on the flavor of the food containing sulfur-compounds containing the vegetables, mushrooms spices and the like is not know.

In addition to the foregoing, use of sulfur compounds as additives to food products is known from JP-A-7313096 and JP-A-8107768. In the former case, glutathione, inter alia, is employed in the production of dried soy sauce to prevent development of a burnt taste during the production of the product. The latter document is concerned with the addition of sulfide maintaining compounds to fish-based broths to enhance the flavor obtained from fish or shellfish. Finally, EP-A-0951840, which is an intermediate publication, is for the production of flavoring compositions containing 2-acetyl-2-thiazoline produced by bioconversion of certain sulfur-containing compounds in the presence of yeast when producing the flavouring composition.

### Object of the Invention

It is an object of the present invention to provide a dried (dry) instant soup or, sauce in which the flavor belonging to vegetables and/or mushroom(s) and/or spice(s) present is enhanced and retained during long-term storage.

According to the present invention there is provided a method imparting to a dried instant soup or sauce containing vegetable(s) and/or mushroom(s) and/or spices long-term retention of flavor attributable to said vegetable(s) and/or mushroom(s) and/or spice(s) by forming a feedstock composition for the dried soup or sauce containing vegetable(s) and/or mushroom(s) and/or spice(s) and including in the feedstock composition or a component thereof at any stage during the production of the composition at least one sulfur-containing compound and having the compound(s) remain undecomposed in the dried instant soup or sauce, which compound(s) is/are selected from the compounds represented by the following general formulae (1) and (2): 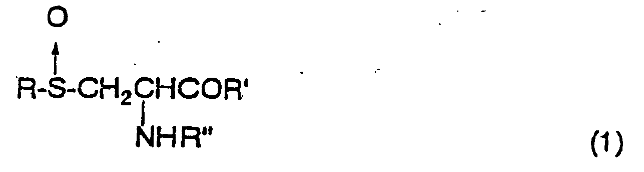 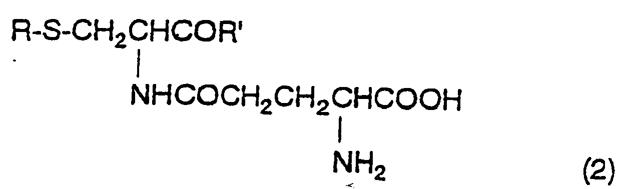 wherein R denotes a hydrogen atom, a saturated or unsaturated aliphatic hydrocarbon group having 1 to 3 carbon atoms, or a carboxyalkyl group; R' denotes a hydroxyl group or a carboxymethylamino group; and R" denotes a hydrogen atom or a γ -glutamyl group, and wherein said compound(s) may be in a salt form, so as to be present in the dried instant soup or sauce produced.

### Disclosure of Invention

As a result of the present inventor's perseverant research towards achieving the above object, the present inventors have found that (a) by adding specific components in the preparation of the dried instant soup (or sauce, it is possible to fortify the flavor belonging to the vegetable(s) and/or mushrooms, and/or spice(s) in the dried instant soup or sauce and to maintain the flavor for a prolonged time. In addition, the inventors have found a specific preferable addition ratio for such components.

Particularly, the present inventors have conducted research into a wide range of components that might meet the above requirements, and found that (c) the sulfur-containing compounds having the above formulae (1) or (2) are most appropriate and that (d) in addition, the benefit of adding the sulfur-containing compounds represented by the above formulae is attained for all dried instant soups containing vegetables, such as Chinese cabbage, cabbage, tomatoes, eggplants, broccoli sprouts, kidney beans, corn, bean sprouts, onions and Welsh onions and edible mushrooms, such as velvet shank (*enoki* mushrooms), *shiitake* mushrooms, *shimeji* mushrooms, common mushrooms and pine tree mushrooms (*matutake* mushrooms) as well as essences thereof. The present inventors have also found that the benefit of adding the sulfur-containing compounds is attained for all dried instant soups containing edible spices such as anise, allspice, cardamon, basil, caraway, nutmegs, dill, fennel, cinnamon, clove, ginger, pepper, Chinese pepper (red-pepper), mustard, prickly ash pepper, garlic, turmeric, lemongrass and coriander as well as essences thereof. The addition of the sulfur-containing compounds gives rise to a accentuation of the flavor of these components and to improved preservation stability.

The present inventors have also found that like or similar effects as thus obtained in dried soup are obtained in dried (dry) sauce.

The present invention has been realised as a result of findings and information to be set out herein.

Insofar as the compounds set out above and to be used in the practice of this invention are concerned, the carboxyalkyl group R preferably has 2 to 5 carbons, such as carboxymethyl, carboxyethyl, carboxypropyl or carboxybutyl. For the salt form of the compounds, the sodium salt, the calcium salt and the like may be mentioned.

The sulfur-containing compound(s) used in the present invention can also be used in the form of a mixture containing the compound(s).

The soup or sauce herein means at least one of various soups and various sauces, inclusive of dressings, and equivalents thereof.

These various sauces denote all sorts of foods that may moisten and impart flavor or even luster to food to render a cooked product easier to eat. They may belong to the cooking cultures of the entire world. The sauces may be those that are served hot and those served cold.

Soups from all countries in the world may benefit from this invention and include all sorts of broths served for dinner, no matter whether they are served cold or hot. The broths may be clarified or thick and turbid. The broths may contain a number of ingredients.

If it is desired to benefit from the effect of the present invention, that is that of augmenting the flavor of vegetables and/or and mushrooms and/or spices in the dried instant soup or sauce and improving its preservation properties, the sulfur-containing compound represented by the formula (1) and (2) is preferably a compound selected from the group consisting of glutathione (GSH), glutamyl cysteine (Y - GC) and the salts thereof.

The present invention is directed to the following, in particular:
1. The production method as defined above in which the sulfur-containing compound(s) used in the present invention is mixed or added in the form of a mixture thereof, in relatively high concentration, with, for example, yeast extract, garlic extract, beef extract or chicken extract.
2. The production method as defined above in which at least one vegetable is/are selected from edible vegetables, inclusive of components, ingredients or extracts thereof, such as Chinese cabbage, cabbage, tomatoes, eggplants, broccoli, sprouts, kidney beans, corn, bean sprouts, onions and leeks, preferably Chinese cabbage, onions, leeks, cabbage and tomatoes, for augmenting the flavor, and/or at least one mushroom is/are selected from edible mushrooms, such as velvet shank (*enoki* mushrooms), *shiitake* mushrooms, *shimeji* mushrooms, common mushrooms and pine tree mushrooms (*matutake* mushrooms), with *shiitake* mushrooms, common mushrooms and pine tree mushrooms, being preferred for having their flavor enhanced. Such materials may be selected from anise, allspice, cardamon, basil, caraway, nutmeg, dill, fennel, cinnamon, clove, ginger, pepper, Chinese pepper (red-pepper), mustard, prickly ash pepper, garlic, turmeric, lemongrass and coriander is preferred, with pepper, garlic, ginger, coriander and basil being particularly preferred for augmenting and enhancing the flavor.
3. The production method as defined above which leads to the sulfur-containing compound(s) specified being incorporated in the dried soup or sauce is preferably carried out such that, when contained in a soup or sauce solution at the time of eating or drinking, the compound(s) will amount to not less than 0.00005% for the effect of the present invention to be obtained, preferably being present in an amount of not less than 0.0005%. Desirably the sulfur-containing compound(s) is/are present in an amount not more than 0.1% and more desirably not more than 0.001% and most desirably in an amount of 0.00005 to 0.1%, or 0.0005 to 0.001%, expressed in weight % of the elemental sulfur content of the sulfur-containing compound(s) in relation to the solution (aqueous solution) of soup or sauce which is to be eaten or drunk.
4. The production method as defined above which leads to the sulfur-containing compound(s)specified for use in the present invention being contained in the dried instant soup or sauce for obtaining the effects characteristic of the present invention, has the compound(s) present in the dried soup or sauce in an amount preferably of not less than 0.0005%, more preferably not less than 0.005%. For not impairing the inherent flavor, the sulfur-containing compound(s) is/are preferably contained in the dried soup or sauce in an amount not more than 1% and more preferably not more than 0.01%Desirably, the sulfur-maintaining compound(s) is/are present in an amount of 0.0005 to 1% and more desirably in an amount of 0.005 to 0.01%, expressed in weight % of the element sulfur content of the sulfur-containing compound(s) in relation to the dried instant soup or sauce produced.
5. A dried instant soup or sauce composition containing a sulfur-containing compound(s) as specified for use in the present invention, or a food product of which the dried instant soup or sauce composition is a constituent, the soup or sauce composition being produced by the method of the invention.
6. A reconstituted soup or sauce made up from a dried soup or sauce composition produced by the method of the invention wherein the sulfur-containing compound(s) is/are contained in an amount for obtaining the effects sufficient in the present invention, preferably of not less than 0.00005 wt. %, more preferably not less than 0.0005%, and in an amount for not impairing the inherent flavor, of preferably not more than 0.1% and more preferably of not more an 0.001%. Overall the content of sulfur-containing compound(s) is desirably from 0.00005 to 0.1%. Expressed in weight % of the element sulfur content of the sulfur-containing compound(s) in relation to the aqueous solution of soup, sauce or the like to be eaten or drunk, the sulfur content preferably ranges from 0.0005 to 0.001%.

### Embodiments of the Invention

The present invention is directed to a method for producing a dried instant soup, sauce or the like, particularly containing vegetable(s) and/or mushroom(s) and/or spice(s), which can be fortified (enhanced) and maintained over a long time, and particularly, to a method for producing a dried instant soup or sauce containing vegetable(s) and/or mushroom(s) and/or spice(s), comprising the step of adding at least one sulfur-containing compound selected from the compounds represented by the above general formulae (1) and (2), which may be in salt form, to a feedstock composition at any stage during the production of dried dry instant soup or sauce containing vegetable(s) and/or mushroom(s) and/or spice(s) so as to be present in the dried soup or sauce thus produced. The invention is also directed to compositions obtained by the method and to food products comprising or using them.

The sulfur-containing compound(s) of the formulae (1) and (2) used in the method according to the present invention may be prepared by any appropriate fermentation method, enzymatic method or chemical synthesis method. The compounds are edible and can be added to food.

Mixtures of sulfur-containing compound(s) may be used in the present invention. For example the composition produced in the method of the invention may be configured to contain one or more compounds additional to those shown in the above formulae (1) or (2). At least one of the compound selected from the above formulae (1) and (2) is used for the present invention, and two or more of the compounds of the above formulae can be used for the present invention. It is possible for only a portion or the totality of the sulfur-containing compound(s) used in the present invention to be in the salt form. Should two or more of the compounds of the above formulae (1) and (2) be used as the sulfur-containing compounds in the method of the present invention, it is possible for only a portion of the sulfur-containing compound(s) to be in salt form.

When adding the sulfur-containing compound(s) used in the present invention, the sulfur-containing compound(s) may be in the form of a mixture thereof, that is a mixture containing the sulfur-containing compound(s). Thus, it is possible to employ a material containing yeast extract, garlic extract, beef extract or chicken extract, with the sulfur-containing compound(s) used in the present invention being present in a relatively high concentration, as part or all of the required sulfur-containing compound(s) used in the present invention.

Of the sulfur-containing compounds represented by the above general formulae, at least one compound selected from the group consisting of glutathione (GSH), glutamyl cysteine (γ -GC) and salts thereof is particularly effective for the present invention to augment the flavor of vegetables and/or mushrooms and/or spices in the dried instant soup or sauce to improve their storage performance.

The adding of the sulfur-containing compounds is effective in particular with such vegetables as Chinese cabbage, cabbage, tomatoes, eggplants, broccoli, sprouts, kidney beans, corn, bean sprouts, onions and leeks and with edible mushrooms, such as velvet shank (*enoki* mushrooms), *shiitake* mushrooms, *shimeji* mushrooms, ordinary mushrooms (common mushrooms) and pine tree mushrooms (*matutake* mushrooms). However, insofar as the flavor augmenting effect is concerned, the sulfur-containing compounds are particularly effective for Chinese cabbages, onions, leeks, cabbages and tomatoes, as vegetables, and *shiitake* mushroom, ordinary mushroom and pine tree mushroom, as mushrooms. Similar effects are noticed for vegetable extracts and mushroom extracts. The effect of addition of the compounds is also noticeable with all spices that can be used in dried instant soup, such as anise, allspice, cardamon, basil, caraway, nutmegs, dill, fennel, cinnamon, clove, ginger, pepper, Chinese pepper (red-pepper), mustard, prickly ash pepper, garlic, turmeric, lemongrass and coriander. However, insofar as the flavor augmenting effect is concerned, the effect is most outstanding for pepper, garlic, ginger, coriander and basil. Similar effects are noticed for spice extracts, such as oleoresin or the like.

As for the dried instant soup or sauce or the like containing the sulfur-containing compound(s) used in the present invention, it is sufficient if it contains at least one member elected from the group consisting of vegetables, mushrooms and spices. The dried instant soup or sauce may contain one or more substance selected from vegetables and/or one or more substance selected from spices. The substances may be in the form of ingredients or extracts thereof.

Products which can be made up as a dried instant soup are Chinese vegetable soup, asparagus cream soup, pot*-*au*-*feu, broccoli cream soup, bean soup, consomme soup, potage soup, chicken soup, *Tom*-*Yam*-*Kun* soup and Chinese noodle soup. The present invention is also effective for dried instant sauce containing vegetables and/or mushrooms and/or spices, such as dressings.

The dried instant soup or sauce may be in the form of powder, granules, cubes etc. that can readily be served instantly.

The dried instant soup or sauce may be prepared by any suitable production method, such as by mixing of dried starting materials, freeze drying, vacuum drying, freeze vacuum drying or granulation.

There is no limitation on when addition of the sulfur-containing compound(s) selected from the compounds represented by the formulae (1) and (2) takes place. However, for preventing decomposition of the sulfur-containing compound(s) used in the present invention and the consequent decrease in the benefit of adding them, the sulfur-containing compound(s) are preferably added in the later part of the production process.

The adding of the sulfur-containing compound(s) used in the present invention may be conducted all at once or in the stages.

There is no particular limitation to the form in which the sulfur-containing compound(s)used in the present invention are added. The sulfur-containing compound(s) may be added in the form of crystals, powders and in other forms, such as a diluted mass and solution containing both the crystals and powders. Thus, one can carry out optional additional method steps, such as adding and subsequently drying the components. It is, however, desirable that the sulfur-containing compound(s) and the like which have been added to the starting material for the dried instant soup or sauce be homogenously distributed at the end of adding them to the starting material.

An experimental example, in which the amount of addition of GSH to be added to the vegetable extracts and spices has been investigated, is now set out.

### Experimental Example

### Evaluation in a Simple Aqueous Solution System

Using 1g/dl of commercial powdered vegetable mix or 1g/dl of commercial powdered mixed spice as a control or comparison material, 0.00005 to 1.0 g/dl of GSH deodorized with activated charcoal was added to the comparison material. By matching comparison test with the control, the strength of flavor was evaluated by an evaluation panel of twenty people. The results are shown in Tables 1 and 2.

**Table 1**

| Sample | Formulation | | strength of vegetable flavour * | Desirability of product ** |
|---|---|---|---|---|
| | mix vegetables (g/dl) | GSH (g/dl) | | |
| (Control) | 1 | | + | 5 |
| A | " | 0.00005 | + | 6 |
| B | " | 0.0005 | ++ | 7 |
| C | " | 0.001 | +++ | 9 |
| D | " | 0.005 | +++ | 9 |
| E | " | 0.01 | +++ | 8 |
| F | " | 0.1 | +++ | 8 |
| G | " | 1.0 | +++ | 6 |

| | | | | |
|---|---|---|---|---|
| * Control group is +, with the evaluation being in four stages from - up to +++. ** Evaluation for control group is set to 5 (bad for 1and good for 10). | | | | |

**Table 2**

| Sample | Formulation | | strength of spice flavour * | Desirability ** |
|---|---|---|---|---|
| | mix spice (g/dl) | GSH (g/dl) | | |
| (Control) | 1 | | + | 5 |
| A | " | 0.00005 | + | 6 |
| B | " | 0.0005 | ++ | 8 |
| C | " | 0.001 | +++ | 9 |
| D | " | 0.005 | +++ | 10 |
| E | " | 0.01 | +++ | 8 |
| F | " | 0.1 ' | +++ | 7 |
| G | " | 1.0 | +++ | 6 |

| | | | | |
|---|---|---|---|---|
| *: Control group is +, with the evaluation being in four stages from - up to +++. **: Evaluation for control group is set to 5 (bad for 1 and good for 10). | | | | |

As may be seen from Tables 1 and 2, addition of not less than 0.0005 wt. % of GSH based on the weight of the soup solution leads to significantly intensified flavor of vegetable(s) and spice(s). On the other hand, addition of GSH in excess of 1.0 wt. % leads to unique and specific impairing of the inherent flavor of the vegetable(s) and spice(s).

Similar checks were made with sulfur-containing compounds of the formulae (1) and (2) other than GSH, such as glutamyl cysteine. It was found that the flavor reinforcing effect is common to these sulfur-containing compounds, its effect being proportional to the weight ratio of the sulfur contained.

From these results, it was established that the content of the sulfur containing compound(s) used in the present invention in a dried instant soup or sauce containing vegetables, mushrooms and/or spices is preferably in the range from not less than 0.00005% to not more than 0.1% and more preferably from not less than 0.00005% to not more than 0.001%related to the make up soup or sauce, the percentage being expressed in wt. % of the element sulfur as contained in the sulfur-containing compound(s) used in the present invention. If the added amount is less than 0.00005%, insufficient effects are obtained. If the adding amount exceeds there 0.1%there is a strange odor having an intensity sufficient to detract from the inherent flavor.

Furthermore, the above results have revealed that a certain range for the content of the sulfur containing compound(s) used in the present invention in the dried instant soup or sauce is desirable.

Thus, the amount of the sulfur-containing compound(s) added to the dried instant soup or sauce product containing the vegetables and/or mushrooms and/or spices is preferably in a range from not less than 0.0005% to not more than 1.0% in terms of wt% of the element sulfur content of the sulfur-containing compound(s) employed in the present invention. If the amount added is less than 0.0005%, sufficient flavor may not be attainable, whereas, if the amount added exceeds 1.0%a strange odor having an intensity sufficient to detract from the inherent flavor is to be noted.

### Preferred Embodiments

The present invention will be explained with reference to the following Examples which are not intended to limit its scope. In these Examples, "%" denotes weight/weight %, unless otherwise specified. "MSG" denotes monosodium L-glutamate, and "IN" denotes sodium 5'-inosinate, respectively.

### Example 1

### Effect of Addition to Cream of Tomato Soup

A cream of tomato soup powder of the following composition:

| Components | Composition |
|---|---|
| wheat powder | 25.0% |
| starch | 16.0% |
| milk powder | 13.0% |
| cream powder | 5.5% |
| onion powder | 2.5% |
| white pepper | 0.3% |
| table salt | 6.0% |
| disodium phosphate | 0.2% |
| dextrin | 2.0% |
| beet powder | 2.5% |
| tomato powder | 27.0% |

was dissolved in hot water in an amount of 5.5g/dl to prepare a cream of tomato soup. GSH was added to this cream of tomato soup, in an amount of 0.01% and sensory tests were conducted by means of a comparison test as to the strength and desirability of the flavor of the vegetables compared with a control group to which GSH was not added. It is seen from Table 3 that the cream of tomato soup with addition of GSH exhibited a vegetable flavor more strongly than the control group thus confirming the significant desirability of the GSH addition group compounds.

**Table 3**

| Items for Valuation Tests | Control Group | GSH Addition Group |
|---|---|---|
| Strength of Vegetable flavor | 1 | 19*** |
| Desirability of flavor | 4 | 16** |

| | | |
|---|---|---|
| *** There is a significant difference with a level of significance of 0.1%. ** There is a significant difference with a level of significance of 1%. | | |

### Example 2

### Effect of Addition to Chinese noodle soup

Chinese noodle soup powder having the following composition:

| Components | Composition |
|---|---|
| garlic powder | 21.0% |
| MSG | 24.0% |
| dextrin | 6.0% |
| onion powder | 3.5% |
| white pepper | 3.2% |
| black pepper | 2.3% |
| table salt | 36.0% |
| sugar ' | 3.0% |
| chicken flavor | 1.0% |

was dissolved in hot water in an amount of 5 g/dl to prepare a Chinese noodle soup. GSH was added to this Chinese noodle soup in an amount of 0.01% and sensory tests were conducted by paired comparison test as to the strength and desirability of the flavor of the spice compared with when there was no GSH addition. It is to be seen from Table 4 that the Chinese noodle soup with addition of GSH exhibited flavor attributable to the spices more strongly than the control group, thus confirming the significant desirability of the GSH addition compounds.

**Table 4**

| Items for Valuation Tests | Control Group | GSH Addition Group |
|---|---|---|
| strength of spice flavor | 4 | 16** |
| desirability of flavor | 5 | 15* |
| N = 20 | | |

| | | |
|---|---|---|
| ** There is a significant difference with a level of significance of 1%. * There is a significant difference with a level of significance of 5%. | | |

### Example 3

### Effect of Addition to Powdered Tomato Sauce

The powder for a tomato sauce having the following composition:

| Components | Composition |
|---|---|
| tomato powder | 56.0% |
| wine vinegar powder | 10.0% |
| table salt | 5.0% |
| granule sugar | 15.0% |
| Guar gum powder | 3.0% |
| white pepper | 0.5% |
| MSG | 3.0% |
| IN | 1.0% |
| dextrin | 5.5% |
| citric acid | 0.5% |
| tomato flavor | 0.5% |

was dissolved in hot water in an amount of 12 g/dl to prepare a tomato sauce. GSH was added to this tomato sauce in an amount of 0.02% and sensory tests were conducted by paired comparison testing as to the strength and desirability of the flavor of the vegetables and mushrooms compared with a non-addition a control group to which GSH was not added. It is seen from Table 5 that the tomato sauce with addition of GSH exhibited the flavor belonging to the vegetables and mushrooms more strongly than the control group thus testifying to significant desirability of the GSH addition group compounds.

**Table 5**

| Items for Valuation Tests | Control Group | GSH addition group |
|---|---|---|
| strength of vegetable flavor | 1 | 19*** |
| desirability of flavor | 5 | 15* |
| N = 20 | | |

| | | |
|---|---|---|
| *** There is a significant difference with a level of significance of 0.1%. * There is a significant difference with a level of significance of 5%. | | |

### Example 4

### Effect of Addition to Onion Soup

Powdered onion soup having the following composition:

| Components | Composition |
|---|---|
| onion powder | 2.0% |
| garlic powder | 0.6% |
| dried onion | 30.0% |
| chicken extract powder | 30.0% |
| chicken powder | 8.0% |
| white pepper | 0.5% |
| powdered thyme | 2.4% |
| white wine powder | 2.0% |
| chicken fat | 2.0% |
| MSG | 8.0% |
| IN | 0.5% |
| table salt | 6.0% |
| dextrin | 8.0% |

was dissolved in hot water in an amount of 6 g/dl to prepare an onion soup. To this onion soup, was added GSH in an amount of 0.02% and sensory tests were conducted by paired comparison testing as to the desirability of the flavor of the spice as compared to a control group to which GSH was not added. It is seen from Table 6 that the powdered onion soup with addition of GSH exhibited the flavor belonging to the spices more strongly than the control group thus testifying to significant desirability of the GSH addition compound.

**Table 6**

| Items for Valuation Tests | control group | GSH addition group |
|---|---|---|
| strength of spice flavor | 4 | 16** |
| Desirability of flavor | 5 | 15* |
| N=20 | | |

| | | |
|---|---|---|
| *** There is a significant difference with a level of significance of 1%. * There is a significant difference with a level of significance of 5%. | | |

### Example 5

### Effect of Addition to Instant Pea Soup

A pea soup was prepared by dissolving pea soup powder having the following composition:

| Components | Composition |
|---|---|
| wheat powder | 30.0% |
| dextrin | 17.5% |
| fat powder | 5.0% |
| table salt | 6.0% |
| white pepper | 0.5% |
| pea powder | 7.0% |
| pea granules | 5.0% |
| dried peas | 28.0% |
| powdered herbs | 1.0% |

in hot water in an amount of 8 g/dl. To this pea soup was added γ -GC in an amount of 0.05% and sensory tests were conducted by paired comparison testing as to the strength and desirability of the vegetable flavor compared with a control group to which γ-GC was not added. It is seen from Table 7 that the pea soup with addition of γ-GC exhibited the flavor belonging to the vegetable more strongly than the control group, thus testifying to significant desirability of the GSH addition group compounds.

**Table 7**

| Items for Valuation Tests | Control Group - | γ -GC addition group |
|---|---|---|
| Strength of vegetables flavor | 2 | 18*** |
| Desirability of flavor | 5 | 15* |

| | | |
|---|---|---|
| *** There is a significant difference within a level of significance of 0.1%. * There is a significant difference with a level of significance of 5%. | | |

### Example 6

### Effect of Addition to Tom-Yam-Kun Soup

A *Tom*-*Yam*-*Kun* soup was prepared by dissolving *Tom-Yam Kun* soup powder having the following composition:

| Components | Composition |
|---|---|
| table salt | 40.0% |
| granulated sugar | 12.5% |
| MSG | 10.5% |
| shrimp extract | 5.0% |
| *Num-pla* powder | 3.0% |
| IN | 0.2% |
| citric acid | 0.5% |
| dried shrimp | 9.0% |
| dried common mushroom | 13.0% |
| lemongrass powder | 2.0% |
| coriander powder | 3.0% |
| Chinese pepper powder | 1.3% |

in hot water in an amount of 4 g/dl. To this *Tom*-*Yam-Kun* soup, was added γ-GC in an amount of 0.05% and sensory tests were conducted by paired comparison testing as to the strength and desirability of the flavor of the spices with a control group to which γ-GC was not added. It is seen from Table 8 that the *Tom-Yam*-*Kun* soup with addition of γ-GC exhibited the flavor belonging to the spices more strongly than the control group thus testifying to significant desirability of the GSH addition group compounds.

**Table 8**

| Items for Valuation Tests | Control Group | γ -GC addition group |
|---|---|---|
| strength of spice flavor | 2 | 18*** |
| Desirability of flavor | 4 | 16** |

| | | |
|---|---|---|
| *** There is a significant difference within a level of significance of 0.1%. ** There is a significant difference within a level of significance of 1%. | | |

### Example 7

### Effect of Addition to Shiitake-Mushroom Soup Powder

A *shiitake*-mushroom soup was prepared by dissolving *shiitake*-mushroom soup powder having the following composition:

| Components | Composition |
|---|---|
| table salt | 5.0% |
| MSG | 3.8% |
| IN | 0.2% |
| dried Chinese matrimony vine seed | 25.0% |
| dried *shiitake-*mushroom | 35.5% |
| soy sauce powder | 8.0% |
| *shiitake*-mushroom extract powder | 22.5% |

in hot water in an amount of 5 g/dl. To this *shiitake-*mushroom soup, was added GSH in an amount of 0.03% and sensory tests were conducted by paired comparison testing as to the strength and desirability of the flavor of the mushroom with a control group to which GSH was not added. It is seen from Table 9 that the *shiitake-*mushroom with addition of GSH exhibited the flavor belonging to the mushroom more strongly than that of the control group thus testifying to significant desirability of addition of a GSH compound to the *shiitake*-mushroom soup.

**Table 9**

| Items for Valuation Tests | Control Group | GSH addition group |
|---|---|---|
| strength of mushroom flavor | 1 | 19*** |
| desirability of flavor | 5 | 15* |

| | | |
|---|---|---|
| *** There is a significant difference within a level of significance of 0.1%. * There is a significant difference within a level of significance of 5%. | | |

### Example 8

### Effect of Addition to Consommé

A consommé was prepared by dissolving consommé soup powder having the following composition:

| Components | Composition |
|---|---|
| table salt | 35.0% |
| MSG | 18.0% |
| IN | 0.2% |
| white pepper powder | 0.3% |
| black pepper powder | 0.5% |
| beef extract powder | 8.0% |
| white wine powder | 3.0% |
| celery powder | 2.0% |
| Chinese cabbage extract powder | 8.0% |
| onion extract powder | 2.5% |
| lactose | 22.5% |

in hot water in an amount of 5 g/dl. γ-GC acid was added to this consommé in an amount of 0.03% and sensory tests were conducted by paired comparison testing as to the strength and desirability of the flavor of the spice compound with a control group to which γ-GC was not added. It is seen from Table 10 that the consommé with addition of γ -GC acid exhibited the flavor belonging to the spice more strongly than the control group thus testifying to significant desirability of adding γ -GC to the consommé.

**Table 10**

| Items for Valuation Tests | Control group | γ -GC addition group |
|---|---|---|
| strength of spice flavor | 2 | 18*** |
| desirability of flavor | 4 | 16** |
| N=20 | | |

| | | |
|---|---|---|
| *** There is a significant difference with a level of significance of 0.1%. ** There is a significant difference with a level of significance of 1%. | | |

### Example 9

### Effect of Addition to Leek Cream Soup Powder

A cream of leek soup powder soup having the following composition was prepared.

| Components | Composition |
|---|---|
| wheat powder | 32.0% |
| starch | 15.0% |
| milk powder | 16.0% |
| cream powder | 5.0% |
| onion powder | 4.0% |
| vegetable oil | 7.5% |
| table salt | 8.0% |
| sugar | 2.5% |
| disodium phosphate | 0.2% |
| white pepper | 0.2% |
| white wine flavor | 0.2% |
| leek flavor | 3.0% |
| dried leek | 5.0% |
| MSG | 1.0% |
| IN | 0.4% |

To this cream of leek soup powder was added high GSH content yeast extract (GSH content: 8.0% by weight) in an amount of 0.05% and the soup was dissolved in water. The resulting solution was freeze-dried. The dried cream of leek soup, thus prepared, was dissolved in hot water in an amount of 5.6 g/dl to prepare a cream of leek soup and sensory tests were conducted by paired comparison testing as to the strength and desirability of the flavor of the vegetables with a control group to which the yeast extract had not been added. It is seen from Table 11 that the cream of leek soup containing a high GSH content yeast extract exhibited the flavor belonging to the vegetables which was stronger than that of the control group thus testifying to significant desirability of the GSH addition group.

**Table 11**

| Items for Valuation Tests | Control Group | GSH addition group |
|---|---|---|
| Strength of vegetable flavor | 3 | 17** |
| Desirability of flavor | 3 | 17** |
| N=20 | | |

| | | |
|---|---|---|
| ** There is a significant difference with a level of significance of 1%. | | |

### Example 10

### Effect of Addition to Chilli sauce

A chilli sauce powder having the following composition was prepared.

| Components | Compositions |
|---|---|
| tomato powder | 45.0% |
| chilli powder | 4.0% |
| onion powder | 5.0% |
| glucose | 26.0% |
| table salt | 8.0% |
| MSG | 3.5% |
| IN | 0.2% |
| Guar gum powder | 5.5% |
| wine vinegar powder | 2.8% |

To this chilli sauce powder was added high GSH content yeast extract (GSH content: 8.0% by weight) in an amount of 0.05% of the chilli sauce and the sauce was dissolved in water. The resulting solution was freeze-dried. The dried chilli sauce, thus prepared, was dissolved in an amount of 30g/dl in hot water to prepare a chilli sauce and sensory tests were conducted by paired comparison testing as to the strength and desirability of the flavor of the spices to which the extract had not been added. It is seen from Table 12 that the chilli sauce containing a high GSH content yeast extract exhibited the flavor belonging to the spices more strongly than the control group thus testifying to significant desirability for the spice flavor of the GSH addition

**Table 12**

| Items for Valuation Tests | Control Group | GSH addition group |
|---|---|---|
| Strength of spice flavor | 2 | 18*** |
| Desirability of flavor | 4 | 16** |
| N=20 | | |

| | | |
|---|---|---|
| *** There is a significant difference in a level of significance of 0.1%. ** There is a significant difference in a level of significance of 1%. | | |

### Example 11

### Effect of Addition to Cream of Broccoli and Cauliflower Soup

0.01% GSH additions and a GSH non-additions were made to cream of broccoli and cauliflower soup having the following composition as powder:

| Components | Composition |
|---|---|
| wheat powder | 32.0% |
| starch | 14.0% |
| milk powder | 17.0% |
| cream powder , | 6.0% |
| onion powder | 1.5% |
| vegetable oil | 8.0% |
| table salt | 6.5% |
| sugar | 1.5% |
| white pepper | 0.4% |
| white wine flavor | 0.8% |
| cauliflower flavor | 3.0% |
| broccoli flavor | 3.5% |
| dried cauliflower | 3.5% |
| dried broccoli | 2.3% |

and 5 g samples of each of the addition group and the non-addition group were packed in a three-layer aluminium pouch and preserved at 24°C. For a control group, a 5°C preserved GSH addition group and 5°C preserved GSH non-addition group were used. The preserved samples were dissolved in hot water at in an amount of 4g/dl and a sensory test was conducted by paired comparison testing of the addition group at 24°C and the addition group at 5°C with the non-addition group at 24°C and the non-addition at group 5°C by 5-stage evaluation, with the strength of flavor of the vegetables in the control group (the sample preserved at 5°C) set to 5. As may be seen from Table 13, the cream soup of broccoli and cauliflower soup containing the GSH, was superior in vegetable flavor preservation properties in comparison with the non-addition group.

**Table 13**

| preservation period (months) | GSH addition group | non-addition group |
|---|---|---|
| 0 | 5 | 5 |
| 3 | 5 | 4.4 |
| 6 | 4.8 | 3.1 |
| 12 | 4.4 | 0.5 |
| N=20 | | |

| | | |
|---|---|---|
| * The evaluation was conducted on a five point rating scale of from 1 to 5 with the strength of the flavor directly after manufacture set to 5 (N=20). | | |

### Example 12

### Effect of Addition to Italian Salad Dressing

An Italian salad dressing powder having the following composition:

| Components | Composition |
|---|---|
| Guar gum powder | 1.5% |
| sugar | 57.7% |
| table salt | 30.0% |
| citric acid | 5.0% |
| trisodium citrate | 1.5% |
| white pepper | 1.3% |
| paprika | 0.7% |
| Rosemary powder | 0.3% |
| dry dill powder | 0.4% |
| red wine vinegar powder | 0.8% |
| wine brandy vinegar powder | 0.8% |

was prepared, with samples either having or not having 0.01% GSH addition. 5g samples thus made up with and without GSH addition were packed in a three-layer aluminium (aluminium) pouch and preserved at 24°C. The preserved samples were dissolved in hot water in an amount of 2g/dl and a sensory test was conducted by paired comparison testing of dressings produced from the respective types of sample by evaluation of the strength of spice flavor and desirability of the flavor. As may be seen from Table 14, the Italian salad dressing containing the GSH had superior spice flavor preservation properties in comparison with dressing lacking GSH addition.

**Table 14**

| Items for Valuation Tests | Non-addition group | GSH addition group |
|---|---|---|
| strength of spice flavor | 2 | 18*** |
| desirability of flavor | 4 | 16** |
| N=20 | | |

| | | |
|---|---|---|
| *** There is a significant difference with a level of significance of 0.1%. ** There is a significant difference with a level of significance of 1%. | | |

## Claims

1. A method for imparting to a dried instant soup or sauce containing vegetable(s) and/or mushroom(s) and/or spices long-term retention of flavour attributable to said vegetable(s) and/or mushroom(s) and/or spice(s) by forming a feedstock composition for the dried soup or sauce containing vegetable(s) and/or mushroom(s) and/or spice(s) and including in the feedstock composition or a component thereof at any stage during the production of the composition at least one sulphur-containing compound and having the compound(s) remain undecomposed in the dried instant soup or sauce, which compound(s) is/are selected from the compounds represented by the following general formulae (1) and (2): 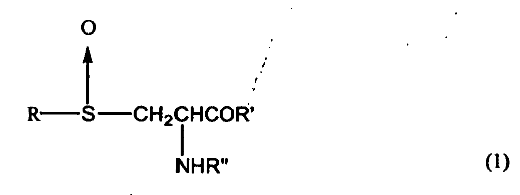 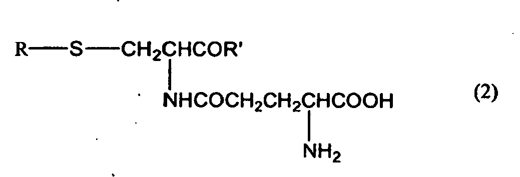 wherein R denotes a hydrogen atom, a saturated or unsaturated aliphatic hydrocarbon group having 1 to 3 carbon atoms, or a carboxyalkyl group; R' denotes a hydroxyl group or a carboxymethylamino group; and R'' denotes a hydrogen atom or a γ - glutamyl group, wherein said compound(s) may be in the salt form and wherein the dried soup or sauce is prepared by mixing of dried starting materials, freeze drying, vacuum drying, freeze vacuum drying or granulation.

2. The method according to claim 1, wherein said at least one sulphur-containing compound to be added is in the form of mixture including said at least one sulphur-containing compound and yeast extract, garlic extract, beef extract or chicken extract.

3. The method according to claim 1 or 2, wherein said vegetable(s) is/are selected from Chinese cabbage, cabbage, tomatoes, eggplants, broccoli sprouts, kidney beans, coms, beansprouts, onions and leeks, said mushroom(s) is/are selected from the edible mushrooms velvet shank, *shiitake* mushroom, *shimeji* mushroom, common mushroom and *matutake* mushroom and said spice(s) is/are selected from anise, allspice, cardamom, basil, caraway, nutmeg, dill, fennel, cinnamon, clove, ginger, pepper, red-pepper, mustard, prickly ash pepper, garlic, turmeric, lemongrass and coriander, said vegetable(s) and/or mushroom(s) and/or spice(s) being present as such or as an extract thereof.

4. The method according to any one of claims 1 to 3, wherein said at least one sulfur-containing compound is employed in the form of a solution thereof in a soup or a sauce in which it constitutes 0.00005~0.1% or 0.0005~0.001 by weight of the soup or sauce, expressed in weight % of the element sulphur content of the sulphur-containing compound(s) related to the weight of soup or sauce, when made up for eating or drinking.

5. The method according to any one of claims 1 to 3, which is carried out to yield a dried instant soup or sauce having a sulphur content of 0.0005~1.0%, preferably 0.005~0.01%, expressed in weight.

6. A dried instant soup or sauce composition containing a sulphur-containing compound, as prepared by the method according to claim 1, or a food product of which the dried instant soup or sauce composition is a constituent.

7. A soup or sauce ready for eating or drinking containing a said soup or sauce composition according to claim 6, wherein the soup or sauce ready for eating or drinking has at least one sulphur-containing compound present in an amount of 0.00005~0.1 % or preferably 0.0005~0.001 %, expressed in weight % of the elemental sulphur content of the sulphur-containing compound(s), related to the solution of the dried instant soup or sauce.

## Patentansprüche

1. Verfahren zum Übertragen einer lang anhaltenden Beibehaltung eines Aromas auf eine getrocknete Fertigsuppe oder Fertigsoße, die ein oder mehrere Gemüse und/oder einen oder mehrere Pilze und/oder ein oder mehrere Gewürze enthält, wobei das Aroma auf das oder die Gemüse und/oder den oder die Pilze und/oder das oder die Gewürze zurückzuführen ist, welches das Bilden einer Nahrungsmittelausgangsmaterialzusammensetzung für die getrocknete Suppe oder Soße, die ein oder mehrere Gemüse und/oder einen oder mehrere Pilze und/oder ein oder mehrere Gewürze enthält, und das Versetzen der Nahrungsmittelausgangsmaterialzusammensetzung oder eines Bestandteils davon bei einer beliebigen Stufe während der Herstellung der Zusammensetzung mit mindestens einer schwefelhaltigen Verbindung, wobei die eine oder mehreren Verbindungen in der getrockneten Fertigsuppe oder Fertigsoße unzersetzt verbleiben und die eine oder mehreren Verbindungen unter Verbindungen der folgenden allgemeinen Formeln (1) und (2) ausgewählt sind: 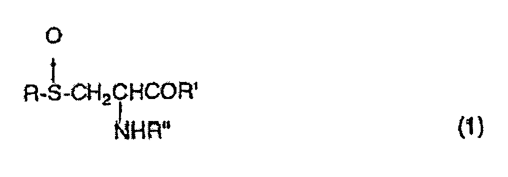 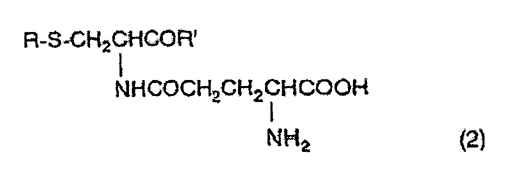 worin R ein Wasserstoffatom, eine gesättigte oder ungesättigte aliphatische Kohlenwasserstoffgruppe mit 1 bis 3 Kohlenstoffatomen oder eine Carboxyalkylgruppe darstellt; R' eine Hydroxygruppe oder eine Carboxymethylaminogruppe darstellt; und R" ein Wasserstoffatom oder eine ä-Glutamylgruppe darstellt, wobei die eine oder mehreren Verbindungen in der Salzform vorliegen können und die getrocknete Suppe oder Soße durch Mischen der getrockneten Ausgangsmaterialien, durch Gefriertrocknen, Vakuumtrocknen, Gefriervakuumtrocknen oder Granulation hergestellt wird.

2. Verfahren nach Anspruch 1, wobei die mindestens eine zuzugebende schwefelhaltige Verbindung in der Form eines Gemisches vorliegt, welches die mindestens eine schwefelhaltige Verbindung und Hefeextrakt, Knoblauchextrakt, Rindfleischextrakt oder Hühnchenfleischextrakt enthält.

3. Verfahren nach Anspruch 1 oder 2, wobei das oder die Gemüse unter Chinakohl, Kohl, Tomaten, Auberginen, Broccolisprossen, Kidneybohnen, Mais, Bohnensprossen, Zwiebeln und Lauch ausgewählt sind, der oder die Pilze unter essbaren Pilzen Samtfüßling, Shiitake-Pilz, Shimeji-Pilz, allgemeinem Pilz und Matutake-Pilz ausgewählt sind, und das oder die Gewürze unter Anis, Piment, Kardamom, Basilikum, Kümmel, Muskatnuss, Dill, Fenchel, Zimt, Nelken, Ingwer, Pfeffer, roter Pfeffer, Senf, Pfeffer des Gelbholzbaums, Knoblauch, Tumeric, Zitronengras und Koriander ausgewählt sind, wobei das oder die Gemüse und/oder der oder die Pilze und/oder das oder die Gewürze als solche oder als Extrakt davon vorhanden sind.

4. Verfahren nach einem der Ansprüche 1 bis 3, wobei die mindestens eine schwefelhaltige Verbindung in der Form einer Lösung in einer Suppe oder Soße eingesetzt wird, worin sie 0,00005-0,1 % oder 0,0005-0,001 % des Gewichts der Suppe oder der Soße, ausgedrückt in Gew. -% des Gehalts an elementarem Schwefel der schwefelhaltigen Verbindung(en) in bezug auf das Gewicht der Suppe oder Soße, ausmacht, wenn die Suppe oder Soße für das Essen oder Trinken zubereitet wird.

5. Verfahren nach einem der Ansprüche 1 bis 3, welches durchgeführt wird, um eine trockene Fertigsuppe oder Soße mit einem Schwefelgehalt von 0,0005-1,0 %, vorzugsweise 0,005-0,01 %, bezogen auf das Gewicht, zu erhalten.

6. Zusammensetzung einer getrocknete Fertigsuppe oder Fertigsoße, die eine schwefelhaltige Verbindung enthält, hergestellt durch das Verfahren nach Anspruch 1, oder ein Nahrungsmittelprodukt, das die Zusammensetzung für eine getrocknete Fertigsuppe oder Soße als Bestandteil enthält.

7. Suppe oder Soße, die essfertig oder trinkfertig ist und die Suppen- oder Soßenzusammensetzung nach Anspruch 6 enthält, wobei die Suppe oder Soße, die ess- oder trinkfertig ist, mindestens eine schwefelhaltige Verbindung in einer Menge von 0,00005-0,1 % oder vorzugsweise 0,0005-0,001 %, ausgedrückt in Gewichtsprozent des Gehalts an elementarem Schwefel der schwefelhaltigen Verbindung(en) in bezug auf die Lösung der getrockneten Fertigsuppe oder Soße, aufweist.

## Revendications

1. Procédé pour conférer à une soupe ou sauce déshydratée instantanée contenant des légume(s) et/ou des champignon(s) et/ou des épices, la conservation à long terme d'arome pouvant être attribué auxdits légume(s) et/ou champignon(s) et/ou épice(s) en formant une composition de départ pour la soupe déshydratée contenant des légume(s) et/ou des champignon(s) et/ou des épice(s) et en incluant dans la composition de départ ou un composant de celle-ci à un stade quelconque durant la production de la composition au moins un composé soufré et maintenir les composé(s) non décomposés dans la soupe ou sauce déshydratée, ces composé(s) étant choisis parmi les composés représentés par les formules générales (1) et (2) : 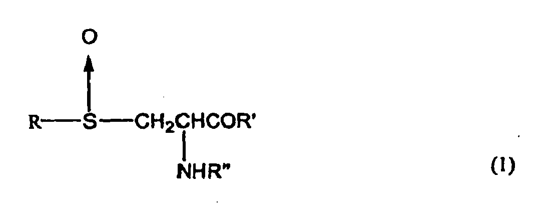 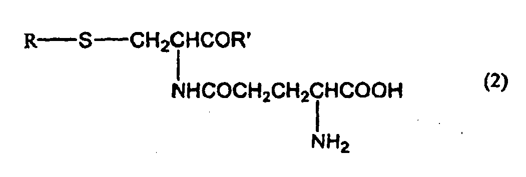 où R désigne un atome d'hydrogène, un groupe hydrocarbure aliphatique saturé ou insaturé ayant de 1 à 3 atomes de carbone, ou un groupe carboxyalkyle ; R' désigne un groupe hydroxyle ou un groupe carboxyméthylamino ; et R" désigne un atome d'hydrogène ou un groupe γ-glutamyle, dans lequel lesdits composés peuvent être sous forme de sel et dans lequel la soupe ou sauce déshydratée est préparée par mélange de matériaux de départ déshydratés, lyophilisation, séchage sous vide, séchage sous vide avec congélation ou granulation.

2. Procédé selon la revendication 1, dans lequel ledit au moins un composé soufré à ajouter est sous forme de mélange comprenant ledit au moins un composé soufré et de l'extrait de levure, de l'extrait d'ail, de l'extrait de boeuf ou de l'extrait de poulet.

3. Procédé selon la revendication 1 ou 2, dans lequel le(s)dit(s) légume(s) est/sont choisi(s) parmi le chou chinois, le chou, la tomate, l'aubergine, le brocoli, les haricots secs, le maïs, les germes de haricot, l'oignon et le poireau, lesdits champignon(s) est/sont choisis parmi les champignons comestibles, le collybie à pied velouté, le champignon *shiitake,* le champignon *shimeji,* le champignon commun et le champignon *matutake* et lesdites épice(s) est/sont choisies parmi l'anis, le piment, la cardamome, le basilic, le carvi, la noix de muscade, l'aneth, le fenouil, la cannelle, le clou de girofle, le gingembre, le poivre, le poivre rouge, la moutarde, le poivre gris piquant, l'ail, le curcuma, la citronnelle et la coriandre, lesdits légume(s) et/ou champignon(s) et/ou épice(s) étant présents tels quels ou sous forme d'extrait de ceux-ci.

4. Procédé selon l'une quelconque des revendications 1 à 3, dans lequel ledit au moins un composé soufré est utilisé sous la forme d'une solution de celui-ci dans une soupe ou une sauce dans laquelle il représente de 0,00005 à 0,1 % ou de 0,0005 à 0,001 en poids de la soupe ou sauce, exprimé en % en poids de la teneur en élément soufre des composé(s) soufré(s) par rapport au poids de la soupe ou sauce, lorsqu'elle est préparée pour être mangée ou bue.

5. Procédé selon l'une quelconque des revendications 1 à 3, qui est conduit pour obtenir une soupe ou sauce en poudre instantanée ayant une teneur en soufre de 0,0005 à 1,0 %, de préférence de 0,005 à 0,01 %, exprimé en poids.

6. Composition de soupe ou sauce en poudre instantanée contenant un composé soufré, préparée par le procédé selon la revendication 1, ou produit alimentaire dont la composition de soupe ou sauce en poudre instantanée est un constituant.

7. Soupe ou sauce prête pour être mangée ou bue contenant ladite composition de soupe ou sauce selon la revendication 6, dans laquelle la soupe ou sauce prête pour être mangée ou bue contient au moins un composé soufré présent en une quantité de 0,00005 à 0,1% ou de préférence de 0,0005 à 0,001 %, exprimé en % en poids de la teneur en soufre élémentaire des composé(s) soufré(s), par rapport à la solution de la soupe ou sauce en poudre instantanée.
